# EUROPÄISCHE PATENTANMELDUNG

(11) **EP 0 985 608 A1**
(43) Veröffentlichungstag der Anmeldung: **15.03.2000**
(21) Anmeldenummer: 98115173.1
(22) Anmeldetag: 12.08.1998
(51) Int. Cl.: B65D 77/00, B65B 25/06

(54) **Verfahren zum Verpacken von verderblichem Gut unter modifizierter Atmosphäre.**

(71) Anmelder: Omni-Pac Ekco GmbH Verpackungsmittel, 22765 Hamburg (DE)
(72) Erfinder: Schmitz, Heinz Jürgen, 21255 Todstedt (DE)
(74) Vertreter: Glawe, Delfs, Moll & Partner

(57) **Zusammenfassung**

Verfahren zum Verpacken von verderblichem Gut wie Fleisch unter modifizierter Atmosphäre in einer sauerstoffdurchlässigen Kleinverpackung und einer sauerstoffundurchlässigen Umverpackung. Die Verpackung geschieht unter Schutzgas. Vor dem Auslegen zum Verkauf wird die Umverpackung befreit, damit Sauerstoff Zutritt zu dem Gut erhält. Dadurch werden unerwünschte Veränderungen, die dies unter der modifizierten Atmosphäre angenommen haben kann, rückgängig gemacht oder beseitigt. Erfindungsgemäß wird als Teil der Kleinverpackung ein Faserstoffmaterial verwendet, insbesondere eine Faserstoffschale, beispielsweise Holzfaserschale.

## Beschreibung

Es ist bekannt, verderbliches Gut wie Fleisch unter modifizierter Atmosphäre, insbesondere Schutzgas wie Stickstoff, zu verpacken, um den Sauerstoffgehalt zu vermindern und dadurch die Haltbarkeit zu verbessern. Dies hat den Nachteil, daß Fleisch sich bräunlich verfärbt und auch anderes Gut unter Schutzgas seine gewohnte Erscheinung und andere Qualitätsmerkmale unangenehm verändern kann. Bei Fleisch ist es deshalb üblich, die Schutzgasverpackung zu entfernen, bevor das Fleisch zum Verkauf an den Verbraucher gelangt, damit es unter Sauerstoffzutritt seine natürliche Farbe zurückgewinnen kann. Und bei anderen Lebensmitteln findet man gelegentlich die Anweisung, die Packung eine gewisse Zeitspanne vor dem Verzehr zu öffnen. Um das Gut trotzdem vor Verschmutzung und Verderb zu schützen, ist es bekannt (EP-B 316 329), das Gut zunächst mit einer sauerstoffdurchlässigen Kleinverpackung zu umhüllen und anschließend diese oder eine Mehrzahl von Kleinverpackungen in einer mit dem Schutzgas befüllten, gasundurchlässigen Umverpackung aufzunehmen. Solange die Umverpackung geschlossen ist, ist das Gut während der Lagerungs- und Transportzeit vor Sauerstoffzutritt geschützt. Bevor das Gut in der Kleinverpackung ausgelegt wird, wird die Umverpackung entfernt. Dadurch gewinnt der Sauerstoff durch die Kleinverpackung hindurch erneut Zugang, und das Gut kann seine natürliche Farbe wieder annehmen.

Wenn während des Verpackungsvorgangs die Luft in der Umverpackung durch Spülen entfernt wird, müssen entweder die Kleinverpackungen zuvor bereits unter Schutzgas verschlossen worden sein, was sehr aufwendig ist, oder sie müssen praktisch luftfrei am Verpackungsgut anliegen, was nur durch aufwendiges Vakuumpacken zu erreichen ist. Wenn die Schutzgasbefüllung der Umverpackung nach vorherigem Evakuieren erfolgt, müssen die aus Kunststoffolien bestehenden Kleinverpackungen Perforationen enthalten, damit die darin gegebenenfalls enthaltene Luft während des Evakuierens entweichen kann. Solche Perforationen stellen aber die Schutzfunktion der Kleinverpackung in der Auslage in Frage.

Der Erfindung liegt daher die Aufgabe zugrunde, ein Verpackungsverfahren der eingangs und im Oberbegriff des Anspruchs 1 genannten Art zu schaffen, das nicht auf luftfreie oder perforierte Kleinverpackungen angewiesen ist.

Die erfindungsgemäße Lösung besteht in den Merkmalen des Anspruchs 1 und vorzugsweise denen des Anspruchs 2.

Demnach wird als Teil der Kleinverpackung ein Faserstoffmaterial, insbesondere eine Faserstoffschale, beispielsweise eine Holzfaserschale, verwendet. Solches Material ist hinreichend luftdurchlässig, um die Evakuierung in der Umverpackung beim Gasaustausch zu ermöglichen, und gewährt dennoch einen vollkommenen Schutz des Guts vor Verschmutzung. Überdies haben Faserstoffschalen weitere Vorteile, insbesondere bei der Fleischverpackung dank ihrem Flüssigkeitsaufnahmevermögen und ihrer vergleichsweise guten Wärmedurchgangswerte, die die Kühlung erleichtern.

Das Verpackungsverfahren spielt sich zweckmäßigerweise so ab, daß die teilweise von Faserstoff gebildeten Kleinverpackungen unter Luftzutritt verschlossen werden und die Umverpackung nach Evakuierung und Schutzbegasung geschlossen wird. Wenn ein Anwender die Evakuierung vermeiden will, besteht statt dessen auch die Möglichkeit, die Kleinverpackungen unter Schutzgas zu schließen und sie anschließend unter Schutzgasbespülung in die Umverpackung zu überführen. Es schadet im allgemeinen nicht, wenn zwischen diesen beiden Verpackungsschritten eine gewisse Zeitspanne liegt, in welcher die Kleinverpackungen der umgebenden Atmosphäre ausgesetzt sind, weil der Diffusionsaustausch des Schutzgases in den Kleinverpackungen gegen lufthaltige Atmosphäre nur verzögert stattfinden kann und deshalb höchstens unmaßgebliche Sauerstoffanteile Zutritt finden.

Die Umverpackung kann beliebige Form haben, beispielsweise starr oder flexibel sein.

Der Faserstoffteil der Kleinverpackung kann flexibel sein und beispielsweise aus Papier bestehen. Jedoch wird er zweckmäßigerweise in der Form einer sogenannten Schale verwendet, die formhaltige Eigenschaften hat. Mit dieser Bezeichnung Schale ist nicht beabsichtigt, den Schutz auf im engeren Sinne schalenförmige Verpackungsteile zu begrenzen; vielmehr können die Faserstoffteile auch die Form von Tabletts, Tellern, Platten, Kästen, Bechern u. ä. annehmen. Entscheidend ist die Eigenschaft des Faserstoffs, dank einer Vielzahl von zwischen den Fasern gebildeten Poren oder Kanälen Gasströmung unter Differenzdruck (beispielsweise beim Evakuieren) bzw. Gasdiffusion bei der erneuten Belüftung zu gestatten. Außer dem Faserstoffteil weist die Verpackung in der Regel einen für Gasströmung im wesentlichen undurchlässigen Teil auf, beispielsweise eine Kunststoffolie, die vorzugsweise durch Siegelung oder dergleichen an den Faserstoffteil dicht angeschlossen ist.

Wenn im vorliegenden Zusammenhang von modifizierter Atmosphäre gesprochen wird, so ist damit in der Regel die Senkung des Sauerstoffgehalts auf einen die Haltbarkeit des Guts steigernden Prozentsatz gemeint. Es können aber auch Gase zugesetzt werden, die die Haltbarkeit steigern und/oder sonstige Eigenschaften des Guts günstig beeinflussen.

### Beispiel 1:

Fleischstücke für den Selbstbedienungsverkauf werden in Kleinverpackungen unter Luftzutritt abgepackt, die aus einer Holzschliffschale und einer damit randversiegelten, im wesentlichen gasundurchlässigen Abdeckfolie bestehen. Eine Mehrzahl derartiger Kleinverpackungen wird anschließend von Steigen z. B. aus Kunststoff oder Pappe aufgenommen, die wiederum einzeln oder in Mehrzahl von einer Folienhülle eingeschlossen werden, die hinreichend sauerstoffundurchlässig ist. Bevor die Folienhülle geschlossen wird, wird sie evakuiert, um den Sauerstoff aus den Kleinverpackungen und den Steigen und deren Zwischenräumen zu entfernen, und anschließend mit Schutzgas befüllt. Der Sauerstoffgehalt in der anschließend in der Hülle enthaltenen Atmosphäre ist so gering, daß die Haltbarkeit des Fleisches erhöht wird.

Nach Lagerung und Versand wird die Umverpackung vor Präsentation der Kleinverpackungen an Endverbraucher entfernt und das Fleisch in den Kleinverpackungen ausgelegt. Da die Luft durch die Poren des Faserstoffmaterials Zutritt zum Fleisch hat, gewinnt es seine natürliche Farbe zurück.

### Beispiel 2:

Die Fleischstücke werden in den Kleinverpackungen gemäß Beispiel 1 unter Schutzgasbespülung verpackt. Anschließend werden eine oder mehrere Kleinverpackungen unter Schutzgasbespülung in Umverpackungen umgesetzt. Verwendung wie unter Beispiel 1.

## Patentansprüche

1. Verfahren zum Verpacken von verderblichem Gut wie Fleisch unter modifizierter Atmosphäre, bei welchem das Gut zunächst in einer sauerstoffdurchlässigen Kleinverpackung und anschließend unter modifizierter Atmosphäre in einer sauerstoffundurchlässigen Umverpackung verpackt, gegebenenfalls gelagert und versandt und schließlich von der Umverpackung befreit und in der Kleinverpackung, beispielsweise zum Verkauf, ausgelegt wird, dadurch gekennzeichnet, daß zumindest als Teil der Kleinverpackung ein Faserstoffmaterial verwendet wird.

2. Verfahren nach Anspruch 1, dadurch gekennzeichnet, daß der Faserstoffteil der Kleinverpackung von einer Faserstoffschale, insbesondere einer Holzfaserschale, gebildet wird.

3. Verfahren nach Anspruch 1 oder 2, dadurch gekennzeichnet, daß die Kleinverpackung unter Luftzutritt verschlossen und die Umverpackung nach Evakuierung und Schutzbegasung geschlossen wird.
